# EUROPÄISCHE PATENTSCHRIFT

(11) **EP 4 574 395 B1**
(45) Veröffentlichungstag und Bekanntmachung des Hinweises auf die Patenterteilung: **21.10.2026**
(21) Anmeldenummer: 24193473.6
(22) Anmeldetag: 08.08.2024
(51) Int. Cl.: B29C 49/28, B29C 49/42, B29C 49/06, B29C 49/24, B29C 49/80, B29C 49/02, B29C 49/48, B29C 49/58, B29C 49/78, B29K 67/00, B29L 31/00

(54) **ANLAGE UND VERFAHREN ZUM HERSTELLEN VON BEHÄLTERN**
SYSTEM AND METHOD FOR PRODUCING CONTAINERS
INSTALLATION ET PROCÉDÉ DE FABRICATION DE RÉCIPIENTS

(30) Priorität: 21.12.2023 DE 102023136335
(43) Veröffentlichungstag der Anmeldung: 25.06.2025
(73) Patentinhaber: Krones AG, 93073 Neutraubling (DE)
(72) Erfinder: Beyer, Michael, 93073 Neutraubling (DE)
(74) Vertreter: Grünecker Patent- und Rechtsanwälte PartG mbB

(56) Entgegenhaltungen:
- EP-A1- 2 785 509
- EP-B1- 0 635 352
- EP-B1- 2 292 402
- EP-B1- 2 785 509
- EP-B1- 2 886 297
- DE-A1- 10 065 547
- DE-A1- 102010 029 644
- DE-A1- 102011 054 890
- DE-U1- 202010 018 050
- JP-A- H07 266 407
- KR-A- 20230 146 708
- US-A1- 2015 151 455
- US-A1- 2015 251 366
- US-A1- 2018 250 869

## Beschreibung

Die vorliegende Erfindung betrifft eine Anlage zum Herstellen von Behältern gemäß Anspruch 1 sowie ein Verfahren zum Umrüsten einer Anlage zum Herstellen von Behältern gemäß Anspruch 8.

### Stand der Technik

Anlagen zum Herstellen von Behältern sind aus dem Stand der Technik hinreichend bekannt, siehe dazu z.B. : DE 102011054890 A1, US 2015/0251366 A1, EP 0635352 B1, EP 2886297 B1, US 2018/0250869 A1, JP H07 266407 A, KR 20230146708 A, US 2015/0151455 A1, EP 2292402 B1, DE 202010018050 U1, DE 102010029644 A1, EP 2785509 A1, DE 10065547 A1, oder mehr im Detail: DE 10 2011 054 890 A1 und US 2015/0251366 A1 offenbaren grundgesetzlich Anlagen zum Herstellen von Behältern, die Anlage umfassend eine Herstellungsmaschine zum Herstellen von Vorformlingen, eine Blasformmaschine zum Herstellen von Behältern aus den Vorformlingen und eine Transporteinrichtung zum Transportieren der Vorformlinge von der Herstellungsmaschine zu der Blasformmaschine, wobei die Anlage eine Umrüstvorrichtung zum Umrüsten wenigstens einer Komponente der Herstellungsmaschine und/oder der Blasformmaschine umfasst;wobei die Transporteinrichtung eine Puffereinrichtung zum Speichern von Vorformlingen umfasst, wobei die Anlage eine Steuereinheit umfasst, die ausgebildet ist, den Transport der Vorformlinge in der Transporteinrichtung so zu steuern, dass Vorformlinge der Puffereinrichtung aus einer Transportbahn der Transporteinrichtung zugeführt werden während die Blasformmaschine umgerüstet wird und ein Transport von Vorformlingen an die Blasformmaschine unterbrochen wird, und/oder dass Vorformlinge aus der Puffereinrichtung der Blasformmaschine zugeführt werden, während die Herstellungsmaschine umgerüstet wird; undwobei die Umrüstmaschine ausgebildet ist, die Blasformmaschine und die Herstellungsmaschine umzurüsten; und entsprechende Verfahren.

Dabei sind insbesondere nicht geblockte und geblockte Ausgestaltungen bekannt. Bei den nicht geblockten Ausgestaltungen werden Vorformlinge für die Behälter beispielsweise mittels Spritzgussmaschinen hergestellt und anschließend zwischengelagert. Hier kann auch ein Weitertransport der hergestellten Vorformlinge an ein verarbeitendes Unternehmen, das aus den Vorformlingen Behälter herstellt, vorgesehen sein. Nach der Zwischenlagerung werden dann die Vorformlinge beispielsweise mittels Blasformmaschinen zu Behältern ausgeformt und anschließend weiter behandelt, insbesondere befüllt, verschlossen und beispielsweise dekoriert, indem Etiketten oder Druckbilder aufgebracht werden.

In geblockten Anlagen findet die Herstellung der Vorformlinge zusammen mit der weiteren Behandlung der Vorformlinge (zumindest zusammen mit dem Ausformen der Vorformlinge zu Behältern) statt, wobei im Wesentlichen der Durchsatz der Herstellungsmaschine, mit der die Vorformlinge hergestellt werden, und der Blasformmaschine oder einer sonstigen die Vorformlinge zu Behältern ausformenden Maschine gleich ist und ein unmittelbarer Transport und Weiterverarbeitung der Vorformlinge nach ihrer Herstellung in der Spritzgussmaschine erfolgt. Insbesondere werden im Normalbetrieb die Vorformlinge direkt über geeignete Transporteinrichtungen der Blasformmaschine zugeführt, die diese dann verarbeitet.

Während des Betriebs von geblockten Anlagen sind jedoch Umrüstarbeiten notwendig. Dabei werden eine oder mehrere Komponenten wenigstens einer der Maschinen ausgetauscht, etwa um einen Formatwechsel durchzuführen, bei dem Komponenten, die für Behälter und/oder Vorformlinge einer ersten Form geeignet sind, gegen Komponenten, die für Behälter und/oder Vorformlinge einer zweiten Form geeignet sind, ausgetauscht.

Aus dem Stand der Technik ist hierzu mit Hinblick auf geblockte Vorrichtungen bzw. Anlagen keine Möglichkeit bekannt, wie ein Umrüsten insbesondere mit reduziertem personellen Einsatz erfolgen kann.

### Aufgabe

Ausgehend vom bekannten Stand der Technik besteht die zu lösende technische Aufgabe somit darin, eine Anlage zum Herstellen von Behältern und ein Verfahren zum Umrüsten einer Anlage anzugeben, mit denen flexibel unterschiedliche Arten von Behältern hergestellt werden können.

Mehr im Detail ist die Aufgabe, dass das Umrüsten möglichst effizient und mit geringen Stillstandszeiten erfolgt, insbesondere wenn die Umrüstzeiten der Blasformmaschine und der Herstellungsmaschine verschieden sind oder nur eine dieser Maschinen umgerüstet werden soll.

### Lösung

Diese Aufgabe wird erfindungsgemäß durch die Anlage zum Herstellen von Behältern gemäß Anspruch 1 und das Verfahren zum Herstellen von Behältern mit einer Anlage zum Herstellen von Behältern gemäß Anspruch 8 gelöst. Vorteilhafte Weiterbildungen der Erfindung sind in den Unteransprüchen erfasst.

Die erfindungsgemäße Anlage zum Herstellen von Behältern umfasst eine Herstellungsmaschine zum Herstellen von Vorformlingen, eine Blasformmaschine zum Herstellen von Behältern aus den Vorformlingen und eine Transporteinrichtung zum Transportieren der Vorformlinge von der Herstellungsmaschine zu der Blasformmaschine, wobei die Anlage eine Umrüstvorrichtung zum Umrüsten wenigstens einer Komponente der Herstellungsmaschine und/oder der Blasformmaschine umfasst.

Die Herstellungsmaschine kann beispielsweise eine Spritzgussmaschine sein oder diese umfassen. Auch anderen Ausgestaltungen der Herstellungsmaschine, etwa als Compression Machine oder Compression Moulding Machine sind denkbar und die Erfindung ist hinsichtlich der Art der Herstellungsmaschine nicht beschränkt.

Während die Blasformmaschine im Folgenden grundsätzlich als zumindest Vorrichtungen zum Ausformen der Behälter umfassend beschrieben wird (beispielsweise Blasformen), kann auch vorgesehen sein, dass die Blasformmaschine stromauf dieser Vorrichtungen eine oder mehrere Erwärmungseinrichtungen zum Erwärmen der Vorformlinge umfasst, beispielsweise einen Ofen, insbesondere einen Infrarot-Ofen oder einen Mikrowellen-Ofen oder einen Laser-Ofen zum Erwärmen der Vorformlinge oder beliebige Kombinationen dieser.

Die Umrüstvorrichtung kann insbesondere ein oder mehrere Werkzeuge und/oder Roboter umfassen, mit denen ein Umrüsten einer Komponente der Herstellungsmaschine und/oder der Blasformmaschine ermöglicht wird. Das Umrüsten kann dabei entweder voll automatisiert durch die Umrüstvorrichtung allein ohne Wechselwirkung mit einem Bediener oder in Kooperation mit einem Bediener erfolgen.

Bei der Komponente der Herstellungsmaschine und/oder der Blasformmaschine kann es sich grundsätzlich um jede strukturelle Komponente dieser Maschinen handeln. Mit Hinblick auf die Spritzgussmaschine kann insbesondere ein Umrüsten oder Austauschen eines Spritzgusswerkzeuges als Komponente vorgesehen sein, mit Hinblick auf die Blasformmaschine können insbesondere Blasformen als Komponenten umgerüstet werden.

Mit der erfindungsgemäßen Anlage wird ein einfacher und zumindest teilweise, bevorzugt vollständig automatisierter Umrüstvorgang bzw. ein Anpassen der Maschinen an unterschiedliche Behältertypen und/oder Vorformlingtypen möglich.

Erfindungsgemäss ist es vorgesehen, dass die Transporteinrichtung eine Puffereinrichtung zum Speichern von Vorformlingen umfasst, wobei die Anlage eine Steuereinheit umfasst, die ausgebildet ist, den Transport der Vorformlinge in der Transporteinrichtung so zu steuern, dass Vorformlinge der Puffereinrichtung aus einer Transportbahn der Transporteinrichtung zugeführt werden während die Blasformmaschine umgerüstet wird und ein Transport von Vorformlingen an die Blasformmaschine unterbrochen wird, und/oder dass Vorformlinge aus der Puffereinrichtung der Blasformmaschine zugeführt werden, während die Herstellungsmaschine umgerüstet wird.

Mit dieser Puffereinrichtung kann gewährleistet werden, dass das Umrüsten möglichst effizient und mit geringen Stillstandszeiten erfolgt, insbesondere wenn die Umrüstzeiten der Blasformmaschine und der Herstellungsmaschine verschieden sind oder nur eine dieser Maschinen umgerüstet werden soll.

In einer Ausführungsform ist vorgesehen, dass die Puffereinrichtung wenigstens zwei Pufferreihen umfasst, die zum Aufnehmen und/oder Fördern von Vorformlingen in die Transportbahn der Transporteinrichtung eingebracht werden können und zum Puffern von Vorformlingen aus der Transportbahn herausbewegt werden können.

Diese Ausführungsform erlaubt es, die Puffereinrichtung in die Transportbahn der Transporteinrichtung zu integrieren, was den Platzbedarf der Anlage reduzieren kann.

Es kann vorgesehen sein, dass die Transporteinrichtung stromauf der Puffereinrichtung ein Sperrelement zum selektiven Sperren und Freigeben eines Transports von Vorformlingen in die Puffereinrichtung umfasst.

Diese Ausführungsform stellt ein zuverlässiges Zuführen von Vorformlingen an die Puffereinrichtung sicher, so dass es auch bei notwendigem Puffern zu reduzierten Betriebsstörungen kommt.

Die Transportbahn kann Förderschienen für die Vorformlinge umfassen und die Pufferreihen können Aufnahmeschienen zum Aufnehmen der Vorformlinge umfassen. Hierdurch kann die Integration der Puffereinrichtung in die Transporteinrichtung vereinfacht realisiert werden.

Es kann vorgesehen sein, dass die Umrüstvorrichtung eine der Blasformmaschine zugeordnete Umrüsteinheit und/oder eine der Herstellungsmaschine zugeordnete Umrüsteinheit umfasst und/oder dass die Umrüstvorrichtung eine zwischen der Blasformmaschine und der Herstellungsmaschine verfahrbare Umrüsteinheit umfasst, wobei die Umrüsteinheit zum Umrüsten der wenigstens einen Komponente ausgebildet ist.

Die Umrüsteinheiten können speziell an die Anforderungen der Blasformmaschine und der Herstellungsmaschine angepasst sein, so dass beispielsweise Werkzeuge für die der Herstellungsmaschine zugeordnete Umrüsteinheit von den Werkzeugen der der Blasformmaschine zugeordneten Umrüsteinheit verschieden ist/sind. Ist eine verfahrbare Umrüsteinheit vorgesehen, so kann diese Werkzeuge umfassen, die an die Anforderungen der Blasformmaschine und der Herstellungsmaschine angepasst sind.

Diese Ausführungsform erlaubt entweder ein simultanes Umrüsten durch Einsatz der den Maschinen zugeordneten Umrüsteinheiten oder eine reduzierte Komplexität der Anlage, wobei dennoch das zuverlässige Umrüsten gewährleistet wird.

Es kann vorgesehen sein, dass die Anlage stromab der Blasformmaschine eine Behälterbehandlungsmaschine zum Behandeln von in der Blasformmaschine hergestellten Behältern umfasst und wobei die Umrüstvorrichtung zum Umrüsten wenigstens einer Komponente der Behälterbehandlungsmaschine ausgebildet ist. Notwendige Umstellungen von Komponenten von Maschinen, die bei der Herstellung und weiteren Verarbeitung der Behälter beteiligt sind, können hiermit zuverlässig durchgeführt werden.

Die Behälterbehandlungsmaschine kann einen Füller und/oder einen Verschließer und/oder eine Etikettiermaschine und/oder eine Druckmaschine und/oder eine Inspektionseinrichtung umfassen. Diese Maschinen erfordern üblicherweise ein Umrüsten bei einem Wechsel zwischen herzustellenden Behältersorten, so dass die Erfindung auf diese Behälterbehandlungsmaschinen besonders vorteilhaft angewandt werden kann.

Erfindungsgemäß ist ebenfalls ein Verfahren zum Umrüsten einer Anlage zum Herstellen von Behältern vorgesehen, die Anlage umfassend eine Herstellungsmaschine zum Herstellen von Vorformlingen, eine Blasformmaschine zum Herstellen von Behältern aus den Vorformlingen und eine Transporteinrichtung zum Transportieren der Vorformlinge von der Herstellungsmaschine zu der Blasformmaschine, wobei die Anlage eine Umrüstvorrichtung zum Umrüsten wenigstens einer Komponente der Herstellungsmaschine und/oder der Blasformmaschine umfasst, wobei das Verfahren ein Umrüsten wenigstens einer Komponente der Herstellungsmaschine und/oder der Blasformmaschine mit der Umrüstvorrichtung umfasst, wobei optional zumindest teilweise während des Umrüstens der Blasformmaschine Vorformlinge mit der Herstellungsmaschine hergestellt werden und/oder optional zumindest teilweise während des Umrüstens der Herstellungsmaschine Vorformlinge mit der Blasformmaschine zum Behältern ausgeformt werden.

Mit diesem Verfahren kann mit reduzierten Stillstandszeiten der Anlage eine Sortenumstellung bzw. ein Umrüsten erfolgen.

Erfindungsgemäss ist es vorgesehen, dass die Transporteinrichtung eine Puffereinrichtung zum Speichern von Vorformlingen umfasst, wobei die Anlage eine Steuereinheit umfasst, die den Transport der Vorformlinge in der Transporteinrichtung so steuert, dass Vorformlinge der Puffereinrichtung aus einer Transportbahn der Transporteinrichtung zugeführt werden während die Blasformmaschine umgerüstet wird und ein Transport von Vorformlingen an die Blasformmaschine unterbrochen wird, und/oder dass Vorformlinge aus der Puffereinrichtung der Blasformmaschine zugeführt werden, während die Herstellungsmaschine umgerüstet wird.

Die Verwendung dieser Puffereinrichtungen kann einen weiteren Betrieb der Blasformmaschine und/oder der Herstellungsmaschine auch während des Umrüstens der jeweils anderen Maschine ermöglichen, sodass Stillstandzeiten der Anlage minimiert werden.

Es kann vorgesehen sein, dass die Transporteinrichtung stromauf der Puffervorrichtung ein Sperrelement zum selektiven Sperren und Freigeben eines Transports von Vorformlingen in die Puffereinrichtung umfasst, wobei das Verfahren ein zumindest zeitweises Sperren des Transports der Vorformlinge in die Puffereinrichtung umfasst.

Beispielsweise kann der Transport der Vorformlinge in die Puffereinrichtung gesperrt werden, wenn eine Pufferreihe der Puffereinrichtung aus der Transportbahn der Transporteinrichtung entfernt wird, um die darin enthaltenen Vorformlinge zu puffern. Hierdurch wird vermieden, dass Vorformlinge unbeabsichtigt in eine nicht zum Aufnehmen der Vorformlinge bereite Puffereinrichtung überführt werden, womit unbeabsichtigte Betriebsunterbrechungen vermieden werden.

Es ist vorgesehen, dass das Verfahren ein Umrüsten der Blasformmaschine und der Herstellungsmaschine umfasst, wobei nach dem Umrüsten der Herstellungsmaschine und vor dem Ende des Umrüstens der Blasformmaschine die Herstellungsmaschine Vorformlinge herstellt und die Vorformlinge der Puffereinrichtung zugeführt werden und wobei nach dem Umrüsten der Blasformmaschine Vorformlinge aus der Puffereinrichtung der Blasformmaschine zum Herstellen von Behältern zugeführt werden und wobei die Herstellungsmaschine nach dem Umrüsten der Blasformmaschine zumindest zeitweise mit einem reduzierten Durchsatz betrieben wird.

Der reduzierte Durchsatz ist also im Vergleich zu einem Durchsatz der Herstellungsmaschine, während eines Betriebszustandes der Anlage, während dem die Blasformmaschine nicht umgerüstet wird, zu verstehen. Der reduzierte Durchsatz kann dabei basierend auf der Anzahl der in der Puffereinrichtung enthaltenen Vorformlinge und dem Durchsatz der Blasformmaschine bestimmt werden, so dass nach Ablauf einer vorgegebenen oder dynamisch berechneten Zeitspanne die Puffereinrichtung geleert ist und anschließend der Durchsatz der Herstellungsmaschine wieder auf den nicht reduzierten Durchsatz erhöht werden kann, bei dem bevorzugt der Durchsatz der Herstellungsmaschine gleich dem Durchsatz der Blasformmaschine oder gleich dem Durchsatz aller Blasformmaschinen der Anlage ist, falls mehr als eine Blasformmaschine vorgesehen ist.

Es kann vorgesehen sein, dass die Herstellungsmaschine mit dem reduzierten Durchsatz betrieben wird, bis die Puffereinrichtung geleert ist. Eine Reduktion des mit der Anlage erreichbaren Durchsatzes an hergestellten Behältern wird hiermit vermieden.

Das Verfahren kann ein Umrüsten der Blasformmaschine und der Herstellungsmaschine umfassen und die Umrüstvorrichtung kann die Blasformmaschine und die Herstellungsmaschine zumindest teilweise gleichzeitig umrüsten.

Das zumindest teilweise gleichzeitige Umrüsten ist in diesem Zusammenhang so zu verstehen, dass die Umrüstvorrichtung zumindest während eines überlappenden Zeitraums, der nicht gleich der Umrüstdauer der Herstellungsmaschine und/oder der Blasformmaschine sein muss, an dem Umrüsten einer Komponente der Blasformmaschine und der Herstellungsmaschine beteiligt ist oder diese durchführt. Hierdurch können Stillstandszeiten bei Sortenumstellungen minimiert werden.

Es kann vorgesehen sein, dass die Anlage stromab der Blasformmaschine eine Behälterbehandlungsmaschine zum Behandeln von in der Blasformmaschine hergestellten Behältern umfasst und dass die Umrüstvorrichtung zum Umrüsten wenigstens einer Komponente der Behälterbehandlungsmaschine ausgebildet ist, wobei das Verfahren ein Umrüsten der Komponente der Behälterbehandlungsmaschine umfasst, wobei optional die Behälterbehandlungsmaschine einen Füller und/oder einen Verschließer und/oder eine Etikettiermaschine und/oder eine Druckmaschine und/oder eine Inspektionseinrichtung umfasst.

Das Umrüsten der gesamten Anlage beispielsweise bei einem Sorten- oder Formatwechsel der Behälter wird hiermit zuverlässig erreicht.

### Kurze Beschreibung der Figuren

- Fig. 1: zeigt eine schematische Ansicht einer Anlage gemäß einer Ausführungsform
- Fig. 3 bis 4: zeigen verschiedene Ausführungsformen einer Puffereinrichtung

### Ausführliche Beschreibung

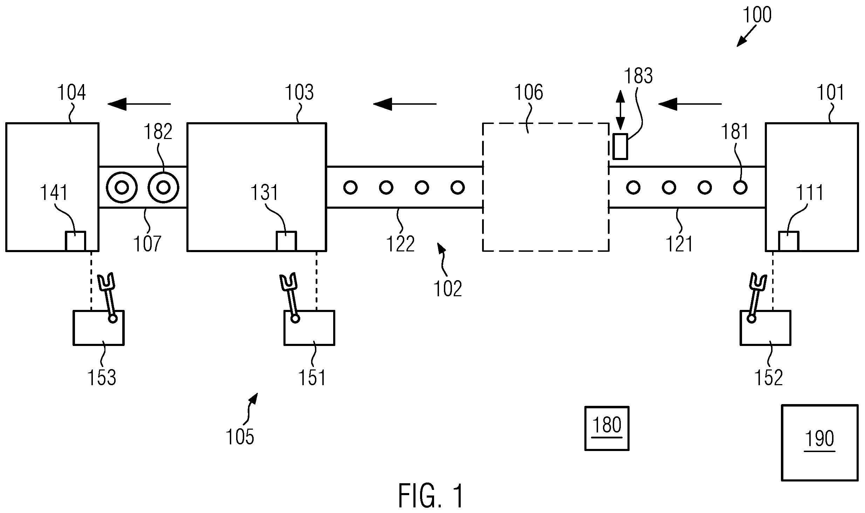

Fig. 1 zeigt eine schematische Ansicht einer erfindungsgemäßen Anlage 100 zum Herstellen von Behältern 182 gemäß einer Ausführungsform.

Die Anlage 100 umfasst erfindungsgemäß zumindest eine Herstellungsmaschine 101 zum Herstellen von Vorformlingen. Die Herstellungsmaschine 101 kann beispielsweise als Spritzgussmaschine oder Compression-Molding-Maschinen oder Compression-Maschinen ausgeführt sein, die aus einem Vorformlingsausgangsmaterial, insbesondere PET (virgin PET aber auch rPET), Vorformlinge herstellt, aus denen anschließend Behälter geformt werden können. Hinsichtlich der genauen Ausgestaltung ist die Herstellungsmaschine jedoch nicht beschränkt.

Erfindungsgemäß umfasst die Anlage 100 weiterhin eine Transporteinrichtung 102, die Vorformlinge aus der Herstellungsmaschine 101 entnehmen und der erfindungsgemäß vorgesehenen Blasformmaschine 103 zuführen kann, in der die Vorformlinge 181 zu Behältern 182 durch biaxiales Verstrecken und insbesondere Blasdruckeinwirken und Verrecken mit einer Reckstange ausgeformt werden können.

Die Transporteinrichtung 102 kann zumindest teilweise als Luftförderer ausgebildet sein, der zwei parallel zueinander verlaufende Förderschienen umfassen kann, welche die Vorformlinge mit ihren Tragringen hängend aufnehmen und durch eine Luftdruckströmung von der Herstellungsmaschine 101 in Richtung der Blasformmaschine 103 befördern können. Alternativ oder zusätzlich kann die Transporteinrichtung zur Übernahme von Vorformlingen aus der Herstellungsmaschine 101 und/oder zur Übergabe von Vorformlingen an die Herstellungsmaschine 103 auch weitere Transportelemente umfassen, wie beispielsweise Klammergreifer und/oder Drehsterne mit geeigneten Greifern, die die Vorformlinge übernehmen und befördern können. Auch etwaige Sortiereinrichtungen, die ein Umordnen der Vorformlinge nach ihrer Herstellung in der Herstellungsmaschine und vor Übergeben an beispielsweise einen Luftförderer bewirken, können vorgesehen sein, werden hier jedoch nicht weiter im Detail beschrieben.

Die Anlage kann weiterhin eine stromab der Blasformmaschine 103 angeordnete Behälterbehandlungsmaschine 104 umfassen, die die in der Blasformmaschine 103 hergestellten Behälter weiter behandeln kann. Die Behälterbehandlungsmaschine 104 kann insbesondere aber nicht ausschließlich als einen Füller und/oder einen Verschließer und/oder eine Etikettiermaschine und/oder eine Druckmaschine und/oder eine Inspektionseinrichtung umfassend ausgeführt sein. Generell kann jede Maschine, die mit dem Behälter interagieren oder auf diesen Einwirken kann, um eine Eigenschaft des Behälters zu bestimmen und/oder zu beeinflussen als eine Behälterbehandlungsmaschine verstanden werden.

Ein Füller kann ein Produkt in den hergestellten Behälter 182 einbringen wohingegen ein Verschließer den bereits befüllten Behälter verschließen kann. Ein Verschließer kann vorteilhaft aber nicht ausschließlich direkt stromab (ohne weitere Behälterbehandlungsmaschine dazwischen) der Blasformmaschine angeordnet sein, wenn die Blasformmaschine als Formfüllmaschine ausgeführt ist, die anstelle von Drucklufteinwirkung das in den Behälter einzufüllende Produkt zum Ausformen des Behälters verwendet. Ein separater Füller stromab der Blasformmaschine ist in dieser Ausführungsform dann nicht erforderlich.

Etikettiermaschinen und Druckmaschinen können dekorative Elemente auf die hergestellten Behälter 182 aufbringen und sind aus dem Stand der Technik grundsätzlich bekannt. Als Inspektionseinrichtung kann beispielsweise eine optische Inspektionseinrichtung, wie eine Kamera vorgesehen sein, die die hergestellten Behälter 182 hinsichtlich ihrer Qualität überprüfen kann.

Zwischen der Behälterbehandlungsmaschine 104 und der Blasformmaschine 103 kann optional eine weitere Transporteinrichtung 107 (beispielsweise ein Linearförderer, wie ein Lufttransporteur, oder ein oder mehrere Drehsterne) angeordnet sein, die die Behälter 182 übernehmen und der Behälterbehandlungsmaschine 104 zuführen kann.

Erfindungsgemäß umfasst die Anlage 100 weiterhin ein Umrüstvorrichtung 105, die zum Umrüsten wenigstens einer Komponente der Herstellungsmaschine und/oder der Blasformmaschine geeignet ist. Die Komponente 111 der Herstellungsmaschine 101 kann beispielsweise ein Spritzgusswerkzeug bei Ausgestaltung der Herstellungsmaschine 101 als Spritzgussmaschine sein. Die Komponente 131 der Blasformmaschine 103 kann beispielsweise eine Blasform oder eine Komponente der Blasform sein, mit der ein Vorformlinge zu einem Behälter ausgeformt werden kann. Alternativ oder zusätzlich kann es sich bei der Komponente 131 auch um eine Reckstange handeln.

In einer Ausführungsform umfasst die Umrüstvorrichtung mehrere Umrüsteinheiten 151 und 152, von denen jeweils wenigstens eine der Blasformmaschine 103 und der Herstellungsmaschine 101 zugeordnet ist und die jeweiligen Komponenten umrüsten kann. In einer alternativen Ausführungsform kann auch vorgesehen sein, dass eine einzelne Umrüsteinheit (beispielsweise die Umrüsteinheit 152) verfahrbar zwischen der Herstellungsmaschine und der Blasformmaschine 103 vorgesehen ist, und zum Umrüsten der wenigstens einen Komponente 111 und/oder 131 zwischen der Herstellungsmaschine 101 und der Blasformmaschine 103 verfahren werden kann. Die verfahrbare Umrüstenheit kann beispielsweise auf Schienen beweglich angeordnet sein oder als frei im Raum oder zumindest der Ebene verfahrbarer Roboter realisiert sein.

Optional können weiterhin ein oder mehrere Komponentenlager 190 vorgesehen sein, die auszutauschende Komponenten der Herstellungsmaschine und/oder Blasformmaschine lagern können. Ist eine verfahrbare Umrüsteinheit vorgesehen, kann vorgesehen sein, dass diese nicht nur zwischen der Blasformmaschine und der Herstellungsmaschine, sondern auch zwischen dem Lager 190 verfahrbar angeordnet ist, so dass die Umrüsteinheit die mit der in der jeweiligen Maschine verbauten Komponente auszutauschende Komponente aus dem Lager 190 entnehmen kann. Sind den Maschinen Umrüsteinheiten fest zugeordnet, kann vorgesehen sein, dass jeder Umrüsteinheit ein Komponentenlager zugeordnet ist, aus dem die Umrüsteinheiten Komponenten zum Umrüsten der jeweiligen Maschine entnehmen kann.

Die Umrüsteinheiten können als stationäre Umrüsteinheiten oder verfahrbare Umrüsteinheiten, wie beispielsweise eine AGV (Automated Guided Vehicle) mit zugeordneten Werkzeugen ausgestaltet sein, so dass diese an dem Umrüsten der Komponente zumindest teilnehmen oder dieses vollständig durchführen können. Grundsätzlich umfasst jede Umrüsteinheit zumindest ein Werkzeug und/oder einen Roboterarm, mit dem die Umrüsteinheit das Umrüsten der Maschine entweder voll-automatisiert oder teilweise in Wechselwirkung mit einem Bediener durchführen kann. Dazu kann die Umrüsteinheit weiterhin Sensoren umfassen, um beispielsweise physische Objekte, wie Bediener und/oder Teile der umzurüstenden Maschine zu erkennen.

Umfasst die Anlage 100 eine Behälterbehandlungsmaschine 104, kann ebenfalls eine Umrüsteinheit 153 dieser Behälterbehandlungsmaschine 104 zum Umrüsten wenigstens einer Komponente 141 der Behälterbehandlungsmaschine vorgesehen sein. Alternativ dazu kann die verfahrbare Umrüsteinheit, wie oben bereits beschrieben, so ausgeführt sein, dass sie zwischen der Behälterbehandlungsmaschine, der Blasformmaschine, der Herstellungsmaschine und optional dem Komponentenlager 190 verfahrbar angeordnet ist (beispielsweise auf Schienen) und so ein Umrüsten jeder der Komponenten 111, 131 und 141 durchführen kann.

Die Komponente der Behälterbehandlungsmaschine kann beispielsweise ein Füllorgan und/oder einen Druckkopf und/oder ein Etikettieraggregat oder ein Bestandteil eines Etikettieraggregats (etwa eine Palettenwelle) und/oder einen Verschließerkopf zum Aufbringen eines Verschlusses auf den Behälter umfassen, je nachdem wie die Behälterbehandlungsmaschine ausgebildet ist und welche Komponente ausgetauscht wird.

In einer weiteren Ausführungsform kann vorgesehen sein, dass die Anlage 101, insbesondere die Transporteinrichtung 102 eine Puffereinrichtung 106 umfasst, in der Vorformlinge 181 gespeichert werden können. Die Puffereinrichtung 106 kann zwischen zwei Teilen oder Abschnitten 121 und 122 der Transporteinrichtung angeordnet sein, so dass Vorformlinge 181 von der Transporteinrichtung bzw. dem Abschnitt 121 der Transporteinrichtung 102 zunächst aus der Herstellungsmaschine 101 der Puffereinrichtung 106 zugeführt werden und anschließend von dem Abschnitt 122 der Transporteinrichtung 102 aus der Puffereinrichtung 106 abgeführt und der Blasformmaschine 106 zugeführt werden können.

In einer bevorzugten Ausführungsform ist dabei vorgesehen, dass die Puffereinrichtung 106 nicht permanent Vorformlinge puffert, sondern als Teil der Transporteinrichtung 102 ausgeführt ist bzw. fungiert, wenn kein Puffern der Vorformlinge erforderlich ist. Die Puffereinrichtung fungiert in diesem Fall als Teil der Transporteinrichtung, so dass möglichst kein Unterschied in der von den Vorformlingen zurückgelegten Wegstrecke verglichen mit einer durchgehenden Transporteinrichtung 102 ohne Puffereinrichtung besteht.

Es kann vorgesehen sein, dass stromauf (und/oder optional stromab) der Puffereinrichtung 106 ein Sperrelement 183 zum selektiven Sperren und Freigeben eines Transports von Vorformlingen in die Puffereinrichtung bzw. aus der Puffereinrichtung angeordnet ist. Das Sperrelement 183 kann beispielsweise stromauf in einem Bereich eines für den Transport der Vorformlinge 181 vorgesehenen Lufttransporteurs angeordnet sein, so dass beispielsweise eine Veränderung der Puffereinrichtung, etwa ein Verschieben einer Pufferreihe der Puffereinrichtung durchgeführt werden kann, während die Vorformlinge 181 durch Sperren des Transports mit dem Sperrelement von einer Bewegung in Richtung der Puffereinrichtung 106 abgehalten werden.

Die Anlage kann in jeder der beschriebenen Ausführungsformen eine Steuereinheit 180 (beispielsweise einen Computer mit zugeordnetem Prozessor und Speicher) umfassen, die die Funktionen der Anlage 100 und insbesondere das Umrüsten der Herstellungsmaschine und/oder der Blasformmaschine und, sofern vorgesehen, der Behälterbehandlungsmaschine 104 steuern kann. Dazu kann die Steuereinheit beispielsweise Steuerbefehle an die Umrüstvorrichtung übermitteln, um diese anzuweisen, das Umrüsten durchzuführen. Zusätzlich kann die Steuereinheit so ausgeführt sein, dass sie das Sperrelement 183 zum Sperren oder Freigeben der Transporteinrichtung und/oder das Zuführen oder Abführen von Vorformlingen in bzw. aus der Puffereinrichtung 106 beispielsweise abhängig von einem Umrüsten der Blasformmaschine 103 und/oder der Herstellungsmaschine 101 steuern kann.

Es kann vorgesehen sein, dass die Steuereinheit ausgebildet ist, die Anlage so zu steuern, dass während eines Umrüstens der Blasformmaschine 103 die mit der Herstellungsmaschine 101 hergestellten Vorformlinge 181 in der Puffereinrichtung gepuffert und nicht an die Blasformmaschine 103 weitertransportiert werden. Wird die Herstellungsmaschine umgerüstet, so kann vorgesehen sein, dass zumindest teilweise während des Umrüstens der Herstellungsmaschine 101 Vorformlinge aus der Puffereinrichtung 106 der Blasformmaschine zugeführt werden, um diese während des Umrüstens der Herstellungsmaschine zu Behältern 182 auszuformen. Hierdurch kann die Stillstandszeit der Herstellungsmaschine und/oder der Blasformmaschine 103 beim Umrüsten der jeweils anderen Maschine reduziert werden. Alternativ oder zusätzlich kann hier auch vorgesehen sein, dass (insbesondere bei Vorsehen von der Herstellungsmaschine 101 und der Blasformmaschine 103 jeweils zugeordneten Umrüsteinheiten 151 und 152) das Umrüsten der Blasformmaschine und der Herstellungsmaschine zumindest teilweise gleichzeitig erfolgt.

Beispielsweise kann vorgesehen sein, dass die Herstellungsmaschine bei einem geplanten Umrüsten der Herstellungsmaschine und der Blasformmaschine zunächst angehalten wird und die Blasformmaschine weiter betrieben wird, bis die Vorformlinge 181, die zuletzt mit der Herstellungsmaschine hergestellt wurden, zu Behältern 182 ausgeformt wurden.

Währenddessen kann durch die Umrüsteinheit 152 bereits ein Umrüsten der Herstellungsmaschine erfolgen. Befinden sich auch in der Blasformmaschine 103 keine auszuformenden Behälter mehr, so kann der Betrieb der Blasformmaschine 103 eingestellt und mit dem Umrüstvorgang (beispielsweise mittels der Umrüsteinheit 151) begonnen werden. Sobald das Umrüsten der Herstellungsmaschine 101 beendet ist, kann diese wieder in Betrieb genommen werden und Vorformlinge 181 (optional mit einem verglichen mit dem Normalbetrieb reduzierten Durchsatz) herstellen, wobei diese Vorformlinge 181 dann der Puffereinrichtung 106 zum Puffern und nicht der Blasformmaschine 103 zugeführt werden. Sobald die Blasformmaschine 103 dann umgerüstet wurde, kann diese erneut in Betrieb genommen werden und zumindest Vorformlinge aus der Puffereinrichtung 106 an die Blasformmaschine 103 zum Ausformen zu Behältern 182 übergeben werden. In diesem Fall kann ein weiterer Betrieb der Herstellungsmaschine 101 mit reduziertem Durchsatz erfolgen, so dass zunächst die Puffereinrichtung 106 leergefahren wird und dennoch genug Vorformlinge hergestellt werden, um die Blasformmaschine 103 zu beschicken. Der Durchsatz der Herstellungsmaschine kann beispielsweise um bis zu 10% oder bis zu 20% oder bis zu 50% gegenüber einem Normalbetrieb reduziert werden, sodass die Anzahl der während dieser Betriebsphase der Puffereinrichtung zugeführten Vorformlinge geringer ist als die Anzahl der aus der Puffereinrichtung entnommenen Vorformlinge pro Zeiteinheit. Dadurch wird die Puffereinheit sukzessive leergefahren.

Ist die Puffereinrichtung 106 leergefahren (enthält also keine gepufferten bzw. gespeicherten Vorformlinge mehr), kann der Durchsatz der Herstellungsmaschine 101 wieder erhöht und beispielsweise dem Durchsatz der Blasformmaschine (oder dem gemeinsamen Durchsatz aller Blasformmaschinen der Anlage sofern mehr als eine Blasformmaschine vorgesehen ist) angeglichen werden, so dass der Normalbetrieb der Anlage fortgeführt werden kann, bis erneut ein Umrüsten erforderlich ist.

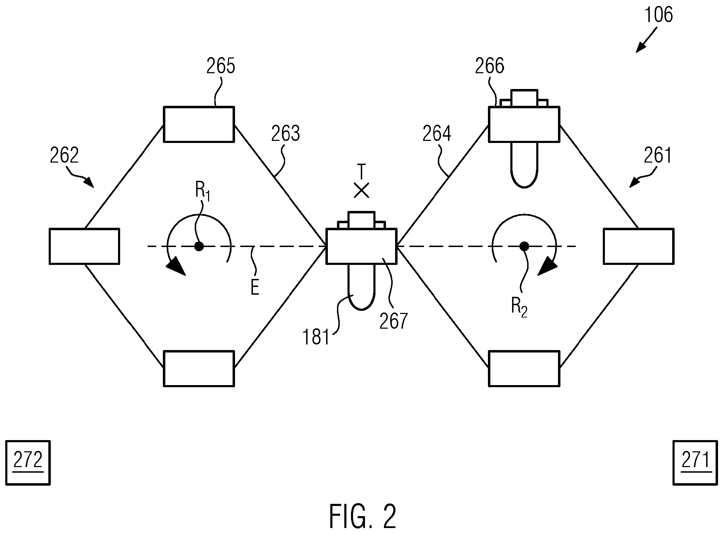

Die Fig. 2 bis 4 zeigen verschiedene Ausführungsformen der Puffereinrichtung 106, die besonders vorteilhaft mit einem zumindest teilweise gleichzeitigen Umrüsten der Blasformmaschine und der Herstellungsmaschine kombiniert werden können, da sie eine im normalen Betrieb höchstens geringe, bevorzugt keine Beeinflussung des Transports der Vorformlinge bewirken und während des Umrüstens ein flexibles Weiterbetreiben der Blasformmaschine und/oder der Herstellungsmaschine erlauben.

In Fig. 2 ist eine Ausführungsform der Puffereinrichtung 106 gezeigt, bei der die Puffereinrichtung 106 zwei optional in Transportrichtung T hintereinander angeordnete Pufferelemente 261 und 262 umfasst. Die Pufferelemente 261 und 262 umfassen einen bevorzugt starren Rahmen 263 bzw. 264, der insbesondere aus Edelstahl bestehend sein kann. An diesem Rahmen sind in jeder Puffereinheit 261 und 262 eine Vielzahl (wenigstens zwei) Pufferreihen 265 und 266 angeordnet, in die Vorformlinge von der Transporteinrichtung eingeschoben werden können und die sich in Transportrichtung T erstrecken. Die Pufferkapazität jeder Pufferreihe ist dabei abhängig von der Ausdehnung der Vorformlinge in Transportrichtung T und der Länge der jeweiligen Pufferreihe. Diese Ausführungsform ist insbesondere von Vorteil, wenn die Transporteinrichtung eine Transportbahn umfasst, die zwei parallel zueinander angeordnete Förderschienen umfasst, zwischen denen die Vorformlinge mit ihrem Tragring hängend transportiert werden (beispielsweise mittels einer Luftströmung). Die Pufferreihen 265 und 266 der Puffereinheiten 261 und 262 können in diesem Fall ebenfalls Aufnahmeschienen umfassen, zwischen denen die Vorformlinge mit ihren Tragringen hängend aufgenommen werden können. In dieser Ausführungsform kann jeder Pufferreihe weiterhin eine oder mehrere Luftdüsen zugeordnet sein, die eine Luftströmung in Transportrichtung T auf die Vorformlinge ausüben können, um diese aus der Puffereinrichtung zu entfernen.

Der Übergang von der Transportbahn in die Pufferreihe kann für die Vorformlinge mit reduzierter Krafteinwirkung in einer von der Transporteinrichtung T verschiedenen Richtung realisiert werden, was erwünschte Fehlstellungen der Vorformlinge vermeiden kann. Dazu kann vorgesehen sein, dass ein vertikaler Versatz zwischen den Aufnahmeschienen und den Förderschienen bei Übernahme der Vorformlinge aus der Transporteinrichtung in eine Pufferreihe möglichst klein, bevorzugt kleiner als 3mm, besonders bevorzugt kleiner als 2mm ist.

Die Pufferreihen sind weiterhin bevorzugt so an den Rahmen 263 und 264 montiert, dass die Vorformlinge stets vertikal entlang ihrer Längsachse aufgehangen sind.

In der gezeigten Ausführungsform wird eine Pufferreihe 267 (beispielsweise eine Pufferreihe der Puffereinheit 261 oder in Transportrichtung nacheinander angeordnete Pufferreihen 267 der Puffereinheit 261 und 262) zunächst mit Vorformlingen beschickt. Anschließend wird bevorzugt das Sperrelement (siehe Fig. 1) betätigt, um den weiteren Transport von Vorformlingen in die Puffereinrichtung zu blockieren. Daraufhin wird die beschickte Puffereinheit 261 mit Hilfe eines der Puffereinheit zugeordneten Antriebselements 271 (beispielsweise ein Servomotor) um die jeweilige Rotationsachse (R₁ oder R₂) in Drehung versetzt, so dass die beschickte Pufferreihe (in der Vorformlinge gepuffert sind) in der dargestellten Drehrichtung aus der Transportbahn der Transporteinrichtung entfernt und die nächste Pufferreihe entweder derselben Puffereinheit und/oder der anderen Puffereinheit in die Transportbahn eingeführt wird, so dass diese mit Vorformlingen beschickt werden kann. Auch der anderen Puffereinheit 262 ist ein entsprechenden Antriebselement 272 zugeordnet.

Die Rotationsachsen R₁ und R₂ sind dabei bevorzugt so angeordnet, dass sie in einer Transportebene E der Vorformlinge und parallel zur Transportrichtung T verlaufen, so dass in vertikaler Richtung kein Höhenunterschied zwischen der Transportbahn der Transporteinrichtung und der die Vorformlinge 181 aufnehmenden Pufferreihe 267 besteht.

Wie bereits erwähnt, kann vorgesehen sein, dass die Puffereinheiten 261 und 262 hintereinander angeordnet sind (in Transportrichtung T), so dass Vorformlinge in einem Puffervorgang in beiden Puffereinheiten bzw. den in Transportrichtung T hintereinander angeordneten Pufferreihen 267 zugeführt werden können. Alternativ kann auch vorgesehen sein, dass die Puffereinheiten 261 und 262 in Transportrichtung T auf gleicher Höhe angeordnet sind, so dass Vorformlinge alternierend den Pufferreihen der Puffereinheiten 261 und 262 zugeführt werden.

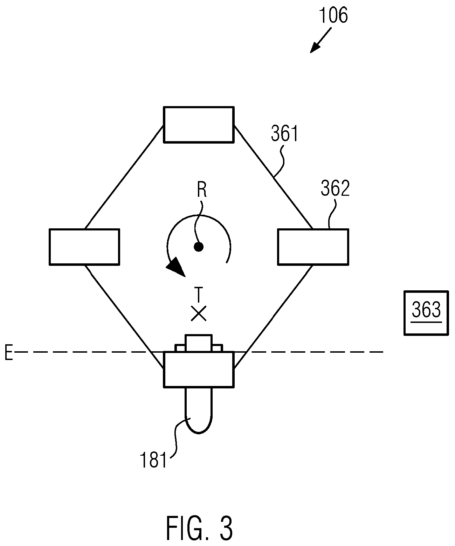

Fig. 3 zeigt eine zur Fig. 2 alternative Ausführungsform. In dieser Ausführungsform umfasst die Puffereinrichtung einen Rahmen 361 mit daran angeordneten Pufferreihen 362 analog zu der Ausführungsform der Fig. 2. In dieser Ausführungsform ist der Rahmen jedoch um eine zur Transportebene E vertikal versetzte, aber parallel zur Transportrichtung T verlaufende Rotationsachse R drehbar angeordnet. Der vertikale Versatz kann entweder nach oben (entgegen der Richtung der Schwerkraft) oder nach unten (in Richtung der Schwerkraft) vorgesehen sein. Weiterhin umfasst die Puffereinrichtung 106 ein Antriebselement 363 (beispielsweise einen Servomotor), das zum Antreiben des Rahmens und der daran angeordneten Pufferreihen 362 ausgeführt wird, so dass diese um die Rotationsachse R gedreht und in eine Transportbahn der Transporteinrichtung eingeführt werden können, um Vorformlinge 181 zu übernehmen.

Der grundsätzliche Aufbau dieser Puffereinrichtung entspricht dem Aufbau einer Puffereinheit der Ausführungsform der Fig. 2 bis auf die relative Anordnung zur Transportbahn der Transporteinrichtung mit Hinblick auf die Rotationsachse R der Puffereinrichtung. Sämtliche sonstigen in Bezug auf Fig. 2 beschriebenen Ausführungsformen sind jedoch auch im Zusammenhang mit der Fig. 3 anwendbar.

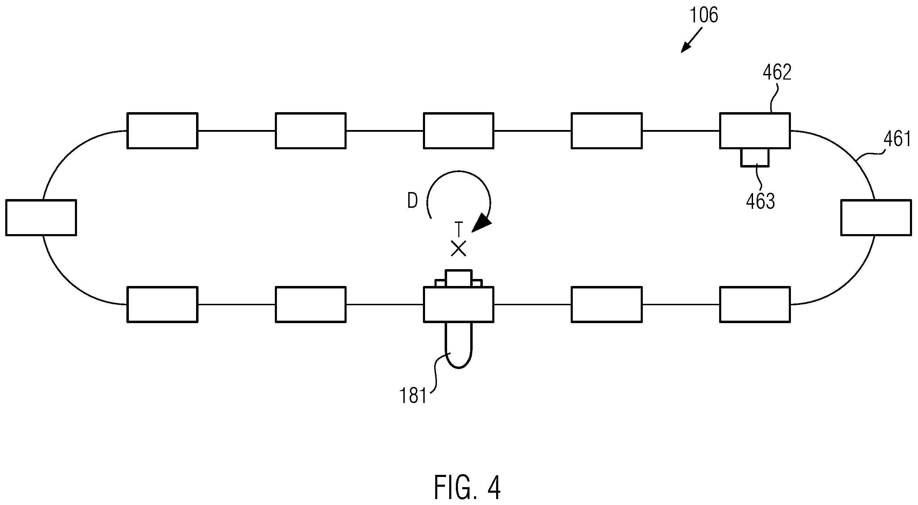

Fig. 4 zeigt eine zu den Ausführungsformen der Fig. 2 und 3 alternative Ausführungsform. In dieser Ausführungsform der Puffereinrichtung 106 ist erneut eine Vielzahl von Pufferreihen 362 vorgesehen, die in einer senkrecht auf der Transportrichtung T stehenden Bewegungsebene entlang einer Führung 461 beweglich angeordnet sind, um in die Transportbahn der Transporteinrichtung eingebracht zu werden und hier Vorformlinge zu übernehmen. Anstelle des starren, drehbar angeordneten Rahmens entsprechend den Ausführungsformen der Fig. 3 und 4 ist in dieser Ausführungsformen jedoch vorgesehen, dass die Pufferreihen an unabhängig voneinander bewegbaren Wägen 463 angeordnet sind, die entlang der Führung 461 entlang der dargestellten Bewegungsrichtung D bewegt werden können. Die Führung 461 kann insbesondere als Teil eines Linearantriebs (als Stator) ausgeführt sein und die mit den Pufferreihen 462 verbundenen Wägen 463 können als Mover ausgeführt sein, die durch elektromagnetische Wechselwirkung mit der Führung 461 selektiv bewegt werden können. Hierdurch kann die Anzahl der pro Zeiteinheit in der Puffereinrichtung 106 übernehmbaren oder aus dieser abführbaren Vorformlinge selektiv gesteuert werden und beispielsweise abhängig von dem Durchsatz der Blasformmaschine und/oder dem Durchsatz der Herstellungsmaschine bei Umrüsten einer dieser Maschinen gesteuert werden.

Mit den beschriebenen Ausführungsformen der Puffereinrichtung kann zusammen mit der Umrüstvorrichtung ein effizientes zumindest teilweise automatisiertes Umrüsten der Maschinen der Anlage erfolgen, wobei insbesondere Stillstandszeiten reduziert werden.

## Patentansprüche

1. Anlage zum Herstellen von Behältern, die Anlage umfassend eine Herstellungsmaschine zum Herstellen von Vorformlingen, eine Blasformmaschine zum Herstellen von Behältern aus den Vorformlingen und eine Transporteinrichtung zum Transportieren der Vorformlinge von der Herstellungsmaschine zu der Blasformmaschine, wobei die Anlage eine Umrüstvorrichtung zum Umrüsten wenigstens einer Komponente der Herstellungsmaschine und/oder der Blasformmaschine umfasst;
wobei die Transporteinrichtung eine Puffereinrichtung zum Speichern von Vorformlingen umfasst, wobei die Anlage eine Steuereinheit umfasst, die ausgebildet ist, den Transport der Vorformlinge in der Transporteinrichtung so zu steuern, dass Vorformlinge der Puffereinrichtung aus einer Transportbahn der Transporteinrichtung zugeführt werden während die Blasformmaschine umgerüstet wird und ein Transport von Vorformlingen an die Blasformmaschine unterbrochen wird, und/oder dass Vorformlinge aus der Puffereinrichtung der Blasformmaschine zugeführt werden, während die Herstellungsmaschine umgerüstet wird; und
wobei die Umrüstvorrichtung ausgebildet ist, die Blasformmaschine und die Herstellungsmaschine umzurüsten, wobei nach dem Umrüsten der Herstellungsmaschine und vor dem Ende des Umrüstens der Blasformmaschine die Herstellungsmaschine Vorformlinge herstellt und die Vorformlinge der Puffereinrichtung zugeführt werden können und wobei nach dem Umrüsten der Blasformmaschine Vorformlinge aus der Puffereinrichtung der Blasformmaschine zum Herstellen von Behältern zugeführt werden können und wobei die Herstellungsmaschine nach dem Umrüsten der Blasformmaschine zumindest zeitweise mit einem reduzierten Durchsatz betrieben werden kann.

2. Anlage nach Anspruch 1, wobei die Puffereinrichtung wenigstens zwei Pufferreihen umfasst, die zum Aufnehmen und/oder Fördern von Vorformlingen in die Transportbahn der Transporteinrichtung eingebracht werden können und zum Puffern von Vorformlingen aus der Transportbahn herausbewegt werden können.

3. Anlage nach Anspruch 1 oder 2, wobei die Transporteinrichtung stromauf der Puffereinrichtung ein Sperrelement zum selektiven Sperren und Freigeben eines Transports von Vorformlingen in die Puffereinrichtung umfasst.

4. Anlage nach einem der Ansprüche 2 oder 3, wobei die Transportbahn Förderschienen für die Vorformlinge umfasst und wobei die Pufferreihen Aufnahmeschienen zum Aufnehmen der Vorformlinge umfassen.

5. Anlage nach einem der Ansprüche 1 bis 4, wobei die Umrüstvorrichtung eine der Blasformmaschine zugeordnete Umrüsteinheit und/oder eine der Herstellungsmaschine zugeordnete Umrüsteinheit umfasst und/oder wobei die Umrüstvorrichtung eine zwischen der Blasformmaschine und der Herstellungsmaschine verfahrbare Umrüsteinheit umfasst, wobei die Umrüsteinheit zum Umrüsten der wenigstens einen Komponente ausgebildet ist.

6. Anlage nach einem der Ansprüche 1 bis 5, wobei die Anlage stromab der Blasformmaschine eine Behälterbehandlungsmaschine zum Behandeln von in der Blasformmaschine hergestellten Behältern umfasst und wobei die Umrüstvorrichtung zum Umrüsten wenigstens einer Komponente der Behälterbehandlungsmaschine ausgebildet ist.

7. Anlage nach Anspruch 6, wobei die Behälterbehandlungsmaschine einen Füller und/oder einen Verschließer und/oder eine Etikettiermaschine und/oder eine Druckmaschine und/oder eine Inspektionseinrichtung umfasst.

8. Verfahren zum Umrüsten einer Anlage zum Herstellen von Behältern, die Anlage umfassend eine Herstellungsmaschine zum Herstellen von Vorformlingen, eine Blasformmaschine zum Herstellen von Behältern aus den Vorformlingen und eine Transporteinrichtung zum Transportieren der Vorformlinge von der Herstellungsmaschine zu der Blasformmaschine, wobei die Anlage eine Umrüstvorrichtung zum Umrüsten wenigstens einer Komponente der Herstellungsmaschine und/oder der Blasformmaschine umfasst, wobei das Verfahren ein Umrüsten wenigstens einer Komponente der Herstellungsmaschine und/oder der Blasformmaschine mit der Umrüstvorrichtung umfasst, wobei zumindest teilweise während des Umrüstens der Blasformmaschine Vorformlinge mit der Herstellungsmaschine hergestellt werden und/oder zumindest teilweise während des Umrüstens der Herstellungsmaschine Vorformlinge mit der Blasformmaschine zu Behältern ausgeformt werden;
wobei die Transporteinrichtung eine Puffereinrichtung zum Speichern von Vorformlingen umfasst, wobei die Anlage eine Steuereinheit umfasst, die den Transport der Vorformlinge in der Transporteinrichtung so steuert, dass Vorformlinge der Puffereinrichtung aus einer Transportbahn der Transporteinrichtung zugeführt werden während die Blasformmaschine umgerüstet wird und ein Transport von Vorformlingen an die Blasformmaschine unterbrochen wird, und/oder dass Vorformlinge aus der Puffereinrichtung der Blasformmaschine zugeführt werden, während die Herstellungsmaschine umgerüstet wird; und
wobei das Verfahren ein Umrüsten der Blasformmaschine und der Herstellungsmaschine umfasst, wobei nach dem Umrüsten der Herstellungsmaschine und vor dem Ende des Umrüstens der Blasformmaschine die Herstellungsmaschine Vorformlinge herstellt und die Vorformlinge der Puffereinrichtung zugeführt werden und wobei nach dem Umrüsten der Blasformmaschine Vorformlinge aus der Puffereinrichtung der Blasformmaschine zum Herstellen von Behältern zugeführt werden und wobei die Herstellungsmaschine nach dem Umrüsten der Blasformmaschine zumindest zeitweise mit einem reduzierten Durchsatz betrieben wird.

9. Verfahren nach Anspruch 8, wobei die Transporteinrichtung stromauf der Puffereinrichtung ein Sperrelement zum selektiven Sperren und Freigeben eines Transports von Vorformlingen in die Puffereinrichtung umfasst, wobei das Verfahren ein zumindest zeitweises Sperren des Transports der Vorformlinge in die Puffereinrichtung umfasst.

10. Verfahren nach Anspruch 8 oder 9, wobei die Herstellungsmaschine mit dem reduzierten Durchsatz betrieben wird, bis die Puffereinrichtung geleert ist.

11. Verfahren nach einem der Ansprüche 8 bis 10, wobei das Verfahren ein Umrüsten der Blasformmaschine und der Herstellungsmaschine umfasst und wobei die Umrüstvorrichtung die Blasformmaschine und die Herstellungsmaschine zumindest teilweise gleichzeitig umrüstet.

12. Verfahren nach einem der Ansprüche 8 bis 11, wobei die Anlage stromab der Blasformmaschine eine Behälterbehandlungsmaschine zum Behandeln von in der Blasformmaschine hergestellten Behältern umfasst und wobei die Umrüstvorrichtung zum Umrüsten wenigstens einer Komponente der Behälterbehandlungsmaschine ausgebildet ist, wobei das Verfahren ein Umrüsten der Komponente der Behälterbehandlungsmaschine umfasst, wobei optional die Behälterbehandlungsmaschine einen Füller und/oder einen Verschließer und/oder eine Etikettiermaschine und/oder eine Druckmaschine und/oder eine Inspektionseinrichtung umfasst.

## Claims

1. A plant for manufacturing containers, wherein the plant comprises a manufacturing machine for manufacturing preforms, a blow molding machine for manufacturing containers from the preforms and a transport device for transporting the preforms from the manufacturing machine to the blow molding machine, wherein the plant comprises a resetting device for resetting at least one component of the manufacturing machine and/or the blow molding machine;
wherein the transport device comprises a buffering device for buffering preforms, wherein the plant comprises a control unit configured to control the transport of the preforms in the transport device such that preforms are supplied to the buffering device from a transport path of the transport device while the blow molding machine is being reset and a transport of preforms to the blow molding machine is stopped, and/or such that preforms from the buffering device are supplied to the blow molding machine while the manufacturing machine is being reset; and
wherein the resetting device is configured to reset the blow molding machine and the manufacturing machine, wherein after resetting the manufacturing machine and before completion of the reset of the blowmolding machine the manufacturing machine manufactures preforms and the preforms can be supplied to the buffering device and wherein after resetting the blow molding machine preforms from the buffering device of the blow molding machine can be supplied for manufacturing containers, and wherein after resetting the blow molding machine the manufacturing machine can be operated with a reduced throughput at least temporarily.

2. The plant according to claim 1, wherein the buffering device comprises at least two buffering rows that can be introduced into the transport path of the transport device for receiving and/or conveying preforms and can be removed from the transport path for buffering preforms.

3. The plant according to claims 1 or 2, wherein the transport device comprises a blocking member for selectively blocking and enabling transport of preforms into the buffering device upstream of the buffering device.

4. The plant according to one of claims 2 or 3, wherein the transport path comprises conveyor rails for the preforms and wherein the buffering rows comprise receiving rails for receiving the preforms.

5. The plant according to anyone of claims 1 to 4, wherein the resetting device comprises a resetting unit allocated to the blow molding machine and/or a resetting unit allocated to the manufacturing machine and/or wherein the resetting device comprises a resetting unit movable between the blow molding machine and the manufacturing machine, wherein the resetting unit is configured to reset the at least one component.

6. The plant according to anyone of claims 1 to 5, wherein the plant comprises a container treatment machine for treating containers manufactured in the blow molding machine downstream of the blow molding machine and wherein the resetting device is configured to reset at least one component of the container treatment machine.

7. The plant according to claim 6, wherein the container treatment machine comprises a filler and/or a capper and/or a labelling machine and/or a printing machine and/or an inspection device.

8. A method for resetting a plant for manufacturing containers, wherein the plant comprises a manufacturing machine for manufacturing preforms, a blow molding machine for manufacturing containers from the preforms and a transport device for transporting the preforms from the manufacturing machine to the blow molding machine, wherein the plant comprises a resetting device for resetting at least one component of the manufacturing machine and/or the blow molding machine, wherein the method comprises resetting at least one component of the manufacturing machine and/or the blow molding machine by means of the resetting device, wherein during resetting the blow molding machine preforms are being at least partially manufactured with the manufacturing machine and/or during resetting of the manufacturing machine preforms are being at least partially formed into containers with the blow molding machine;
wherein the transport device comprises a buffering device for buffering preforms, wherein the plant comprises a control unit controlling the transport of the preforms in the transport device such that preforms are supplied to the buffering device from a transport path of the transport device while the blow molding machine is being reset and a transport of preforms to the blow molding machine is stopped, and/or such that preforms from the buffering device are supplied to the blow molding machine while the manufacturing machine is being reset; and
wherein the method comprises resetting the blow molding machine and the manufacturing machine, wherein after resetting the manufacturing machine and before completion of the reset of the blowmolding machine the manufacturing machine manufactures preforms and the preforms are supplied to the buffering device and wherein after resetting the blow molding machine preforms from the buffering device can be supplied to the blow molding machine for manufacturing containers, and wherein after resetting the blow molding machine the manufacturing machine can be operated with a reduced throughput at least temporarily.

9. The method according to claim 8, wherein the transport device comprises a blocking member for selectively blocking and enabling transport of preforms into the buffering device upstream of the buffering device, wherein the method comprises blocking the transport of the preforms into the buffering device at least temporarily.

10. The method according to claims 8 or 9, wherein the manufacturing machine is operated with the reduced throughput until the buffering device is emptied.

11. The method according to any one of claims 8 to 10, wherein the method comprises resetting the blow molding machine and the manufacturing machine, and wherein the resetting device resets the blow molding machine and the manufacturing machine at least in part simultaneously.

12. The method according to anyone of claims 8 to 11, wherein the plant comprises a container treatment machine for treating containers manufactured in the blow molding machine downstream of the blow molding machine and wherein the resetting device is configured to reset at least one component of the container treatment machine, wherein the method comprises resetting the component of the container treatment machine, wherein optionally the container treatment machine comprises a filler and/or a capper and/or a labelling machine and/or a printing machine and/or an inspection device.

## Revendications

1. Installation de fabrication de récipients, l'installation comprenant une machine de fabrication permettant de fabriquer des préformes, une machine de moulage par soufflage permettant de fabriquer des récipients à partir des préformes et un dispositif de transport permettant de transporter les préformes de la machine de fabrication jusqu'à la machine de moulage par soufflage, dans laquelle l'installation comprend un dispositif de réoutillage permettant de réoutiller au moins un composant de la machine de fabrication et/ou de la machine de moulage par soufflage ;
dans laquelle le dispositif de transport comprend un dispositif tampon permettant de stocker des préformes, dans laquelle l'installation comprend une unité de commande conçue pour commander le transport des préformes dans le dispositif de transport de sorte que les préformes du dispositif tampon sont dirigées vers le dispositif de transport à partir d'une voie de transport pendant que la machine de moulage par soufflage est réoutillée et de sorte que le transport de préformes vers la machine de moulage par soufflage est interrompu, et/ou de sorte que les préformes sont dirigées vers la machine de moulage par soufflage à partir du dispositif tampon pendant que la machine de fabrication est réoutillée ; et
dans laquelle le dispositif de réoutillage est conçu pour réoutiller la machine de moulage par soufflage et la machine de fabrication, dans laquelle, après le réoutillage de la machine de fabrication et avant la fin du réoutillage de la machine de moulage par soufflage, la machine de fabrication produit des préformes et les préformes peuvent être dirigées vers le dispositif tampon et dans laquelle, après le réoutillage de la machine de moulage par soufflage, des préformes peuvent être dirigées vers la machine de moulage par soufflage à partir du dispositif tampon afin de fabriquer des récipients et dans laquelle la machine de fabrication peut être exploitée au moins temporairement avec un débit réduit après le réoutillage de la machine de moulage par soufflage.

2. Installation selon la revendication 1, dans laquelle le dispositif tampon comprend au moins deux rangées de tampons qui peuvent être introduites dans la voie de transport du dispositif de transport afin de recevoir et/ou transporter des préformes et qui peuvent être déplacées hors de la voie de transport afin mettre les préformes en tampon.

3. Installation selon la revendication 1 ou 2, dans laquelle le dispositif de transport comprend, en amont du dispositif tampon, un élément de blocage permettant de bloquer et de libérer de manière sélective un transport de préformes dans le dispositif tampon.

4. Installation selon l'une quelconque des revendications 2 ou 3, dans laquelle la voie de transport comprend des rails de convoyage destinés aux préformes et dans laquelle les rangées de tampons comprennent des rails de réception permettant de recevoir les préformes.

5. Installation selon l'une quelconque des revendications 1 à 4, dans laquelle le dispositif de réoutillage comprend une unité de réoutillage associée à la machine de moulage par soufflage et/ou une unité de réoutillage associée à la machine de fabrication et/ou dans laquelle le dispositif de réoutillage comprend une unité de réoutillage pouvant être déplacée entre la machine de moulage par soufflage et la machine de fabrication, dans laquelle l'unité de réoutillage est conçue pour le réoutillage du au moins un composant.

6. Installation selon l'une quelconque des revendications 1 à 5, dans laquelle l'installation comprend, en aval de la machine de moulage par soufflage, une machine de traitement de récipients permettant de traiter des récipients fabriqués dans la machine de moulage par soufflage et dans laquelle le dispositif de réoutillage est conçu pour le réoutillage d'au moins un composant de la machine de traitement de récipients.

7. Installation selon la revendication 6, dans laquelle la machine de traitement de récipients comprend une remplisseuse et/ou une capsuleuse et/ou une étiqueteuse et/ou une machine d'impression et/ou un dispositif d'inspection.

8. Procédé de réoutillage d'une installation de fabrication de récipients, l'installation comprenant une machine de fabrication permettant de fabriquer des préformes, une machine de moulage par soufflage permettant de fabriquer des récipients à partir des préformes et un dispositif de transport permettant de transporter les préformes de la machine de fabrication jusqu'à la machine de moulage par soufflage, dans lequel l'installation comprend un dispositif de réoutillage permettant de réoutiller au moins un composant de la machine de fabrication et/ou de la machine de moulage par soufflage, dans lequel le procédé comprend une étape consistant à réoutiller au moins un composant de la machine de fabrication et/ou de la machine de moulage par soufflage par le dispositif de réoutillage, dans lequel des préformes sont produites par la machine de fabrication au moins en partie pendant le réoutillage de la machine de moulage par soufflage et/ou des préformes sont transformées en récipients par la machine de moulage par soufflage au moins en partie pendant le réoutillage de la machine de fabrication ;
dans lequel le dispositif de transport comprend un dispositif tampon permettant de stocker des préformes, dans lequel l'installation comprend une unité de commande conçue pour commander le transport des préformes dans le dispositif de transport de sorte que les préformes du dispositif tampon sont dirigées vers le dispositif de transport à partir d'une voie de transport pendant que la machine de moulage par soufflage est réoutillée et le transport de préformes vers la machine de moulage par soufflage est interrompu, et/ou de sorte que les préformes sont dirigées vers la machine de moulage par soufflage à partir du dispositif tampon pendant que la machine de fabrication est réoutillée ; et
dans lequel le procédé comprend une étape consistant à réoutiller la machine de moulage par soufflage et la machine de fabrication, dans lequel, après le réoutillage de la machine de fabrication et avant la fin du réoutillage de la machine de moulage par soufflage, la machine de fabrication produit des préformes et les préformes peuvent être dirigées vers le dispositif tampon et dans lequel, après le réoutillage de la machine de moulage par soufflage, des préformes peuvent être dirigées vers la machine de moulage par soufflage à partir du dispositif tampon afin de fabriquer des récipients et dans lequel la machine de fabrication peut être exploitée au moins temporairement avec un débit réduit après le réoutillage de la machine de moulage par soufflage.

9. Procédé selon la revendication 8, dans lequel le dispositif de transport comprend, en amont du dispositif tampon, un élément de blocage permettant de bloquer et de libérer de manière sélective un transport de préformes dans le dispositif tampon, dans lequel le procédé comprend une étape consistant à bloquer au moins temporairement le transport des préformes dans le dispositif tampon.

10. Procédé selon la revendication 8 ou 9, dans lequel la machine de fabrication est exploitée avec le débit réduit jusqu'à ce que le dispositif tampon soit vidé.

11. Procédé selon l'une quelconque des revendications 8 à 10, dans lequel le procédé comprend une étape consistant à réoutiller la machine de moulage par soufflage et la machine de fabrication, et dans lequel le dispositif de réoutillage réoutille simultanément au moins partiellement la machine de moulage par soufflage et la machine de fabrication.

12. Procédé selon l'une quelconque des revendications 8 à 11, dans lequel l'installation comprend, en aval de la machine de moulage par soufflage, une machine de traitement de récipients permettant de traiter des récipients fabriqués dans la machine de moulage par soufflage, et dans lequel le dispositif de réoutillage est conçu pour le réoutillage d'au moins un composant de la machine de traitement de récipients, dans lequel le procédé comprend une étape consistant à réoutiller le composant de la machine de traitement de récipients, dans lequel la machine de traitement de récipients comprend éventuellement une remplisseuse et/ou une capsuleuse et/ou une étiqueteuse et/ou une machine d'impression et/ou un dispositif d'inspection.
